# EUROPÄISCHE PATENTSCHRIFT

(11) **EP 1 342 957 B1**
(45) Veröffentlichungstag und Bekanntmachung des Hinweises auf die Patenterteilung: **01.03.2006**
(21) Anmeldenummer: 02026196.2
(22) Anmeldetag: 25.11.2002
(51) Int. Cl.: F24D 17/00, F24D 19/10

(54) **Steuergerät und Verfahren zur Steuerung einer Umwälzpumpe**
Method and apparatus for controlling a circulation pump
Méthode et appareil pour contrôler une pompe de circulation

(30) Priorität: 28.02.2002 DE 10208772
(43) Veröffentlichungstag der Anmeldung: 10.09.2003
(73) Patentinhaber: Henke-Sass, Wolf GmbH, D-78532 Tuttlingen (DE)
(72) Erfinder: Schnell, Günter, 78532 Tuttlingen (DE)
(74) Vertreter: Geyer, Fehners & Partner

(56) Entgegenhaltungen:
- EP-A- 0 544 207
- DE-A- 3 309 199
- DE-A- 3 505 191
- DE-A- 4 410 864
- DE-U- 29 720 566

## Beschreibung

Die Erfindung bezieht sich auf ein Steuergerät für eine Umwälzpumpe zum Einsatz in einer sanitären Wasserversorgungseinrichtung, bei der eine Warmwasserquelle und eine Zapfstelle über eine Speiseleitung verbunden sind und von der Speiseleitung eine Rückführleitung zur Warmwasserquelle besteht, so daß Speise- und Rückführleitung eine Ringleitung bilden, und die Umwälzpumpe in die Ringleitung geschaltet ist, wobei das Steuergerät aufweist: einen Durchflußsensor, der in die Speiseleitung geschaltet ist und dort einen Durchfluß erfaßt und ein Flußsignal abgibt, eine Steuereinrichtung, die einen Schaltausgang aufweist, an dem ein Schaltsignal abgebbar ist, das bei einem Einschaltpegel einen Betrieb der Umwälzpumpe und bei einem Ausschaltpegel ein Ruhen der Umwälzpumpe bewirkt, wobei die Steuereinrichtung in Abhängigkeit vom Flußsignal das Schaltsignal auf den Einschaltpegel setzt, diesen dann unabhängig vom Flußsignal über eine Pumpzeitdauer beibehält, dann auf den Ausschaltpegel setzt und diesen für die Dauer einer Totzeit beibehält und erst nach Ablauf der Totzeit einen Wechsel auf den Einschaltpegel ermöglicht. Die Erfindung bezieht sich weiter auf ein Verfahren zur Steuerung einer Umwälzpumpe zum Einsatz in einer sanitären Wasserversorgungseinrichtung, bei der eine Warmwasserquelle und eine Zapfstelle über eine Speiseleitung verbunden sind und von der Speiseleitung eine Rückführleitung eine Ringleitung bilden, und die Umwälzpumpe in die Ringleitung geschaltet ist, mit folgenden Verfahrensschritten: kontinuierliche Überwachung des Flusses in der Speiseleitung, Einschalten der Umwälzpumpe bei einem bestimmten Flußwert, anschließend Abschalten der Umwälzpumpe in Abhängigkeit von einer Pumpzeit und unabhängig vom Fluß, nachfolgend Sperren des Betriebs der Umwälzpumpe für die Dauer einer Totzeit und nach Ablauf der Totzeit Ermöglichen eines erneuten Betriebs der Umwälzpumpe.

Solche Umwälzpumpen dienen dazu, in sanitären Warmwasserversorgungseinrichtungen eine Warmwasserzirkulation zwischen Warmwasserquelle und Zapfstelle herzustellen. Diese ist erforderlich, damit bei einer Wasserentnahme sofort warmes Wasser an der Zapfstelle zur Verfügung steht, das ansonsten infolge längeren Ruhens in der Leitung abgekühlt wäre. Ein kontinuierliches Umwälzen des warmen Wassers ist jedoch zu energieaufwendig. Um Umwälzpumpen energiesparend betreiben zu können, werden daher Steuereinrichtungen eingesetzt, die den Betrieb der Umwälzpumpen möglichst bedarfsorientiert steuern sollen. Da der Warmwasserverbrauch zwar unregelmäßig erfolgt, aber tageszeitlich grob abschätzbar ist, kommen u.a. Steuereinrichtungen mit Zeitschaltuhren zum Einsatz.

Andere Umwälzpumpen können bedarfsabhängig von jeder Zapfstelle aus eingeschaltet werden. Dies kann, wie zum Beispiel in der DE 93 14 209 beschrieben, manuell durch handbetätigte oder automatisch durch Lichtschranken o.ä. gesteuerte Schalter geschehen, die an der Zapfstelle angeordnet sind und Ober die eine Umwälzpumpe eingeschaltet wird, bevor Warmwasser entnommen wird.

Gemäß der DE 94 16 613.7 wird eine Wasserbewegung in einer Warmwasserleitung infolge einer Wasserentnahme von einem ersten Sensor registriert, und eine Umwälzpumpe daraufhin eingeschaltet. Ein zweiter Sensor dient der Erfassung einer Temperaturerhöhung an einer Stelle in der Wasserleitung stromab der Zapfstelle. Eine Temperaturerhöhung ist gleichbedeutend mit einer Versorgung der Zapfstelle mit Warmwasser. Erkennt sie der Sensor, gibt er daraufhin ein Signal zum Abschalten der Umwälzpumpe.

In der DE 89 02 539.3 ist ein Steuergerät beschrieben, bei dem mittels eines Strömungsschalters eine Bewegung des Wasser in einem Wasserkreislauf infolge eines Wasserverbrauchs erfaßt wird und dann eine Umwälzpumpe eingeschaltet wird. Ein Nachlaufrelais schaltet sie nach einem gewissen Zeitraum dann zeitverzögert wieder aus.

Aus der DE 35 05 191 A1 ist eine Zirkulationspumpenschaltung für eine Warmwasseranlage mit Warmwasserzirkulation beschrieben. Dabei wird eine Zirkulationspumpe bei Detektion eines Flusses in der Zirkulationsleitung für eine bestimmte Zeitspanne in Betrieb genommen. Weiter ist eine Wiedereinschaltsperre vorgesehen, die verhindert, daß die Zirkulationspumpe innerhalb einer gewissen Zeitspanne nach Betriebsende nochmals eingeschaltet wird. Ein ähnliches Konzept schildem auch die EP-A- 0544207 oder die DE 94 16 613 U1. In beiden Entgegenhaltungen soll ein Wiedereinschalten der Zirkulationspumpe verhindert werden, solange das Wasser in der Warmwasserzirkulationsleitung noch warm ist. Dementsprechend sind Zeitdauern für eine Wiedereinschaltsperre zwischen 10 und 30 Minuten in der DE 35 05 191 A1 erwähnt.

Der Erfindung liegt die Aufgabe zugrunde, eine Steuereinrichtung für eine Umwälzpumpe zu schaffen, die einen sparsamen Betrieb der Umwälzpumpe bei gleichzeitiger verbrauchsorientierter Versorgung der Zapfstelle mit Warmwasser gewährleistet.

Diese Aufgabe wird durch ein Verfahren der Eingangs, genannten Art bei dem die Totzeit abhängig von einem Abklingen eines durch die Umwälzpumpe in der Ringleitung erzeugten Flusses gewählt ist, und durch ein Steuergerät der Eingangs genamten Art gelöst, bei dem die Steuereinrichtung die Totzeit beendet, wenn das Flußsignal unter einen Schwellwert fällt.

Erfindungsgemäß wird also die Steuerung der Umwälzpumpe in zwei Phasen geteilt: in einer ersten Phase reagiert die Steuerung auf einen bestimmten Fluß in der Speiseleitung. Durch die Reaktion der Steuerung wird eine zweite Phase eingeleitet, in der die Steuerung den Betrieb der Umwälzpumpe nach einem festgelegten Zeitschema gestaltet. Dieses gliedert sich in zwei Abschnitte, nämlich in eine Pumpzeit, in der die Umwälzpumpe für eine festgelegte Zeitdauer in Betrieb ist, und eine Totzeit, in der der Betrieb der Umwälzpumpe für eine ebenfalls festgelegte Zeitdauer gesperrt ist. Das Ende der Totzeit stellt gleichzeitig das Ende der zweiten Phase dar. Die Steuerung reagiert dann wieder auf einen bestimmten Fluß.

Den wesentlichen Parameter der ersten Phase stellt also ein bestimmter Fluß in der Speiseleitung dar. Unter Speiseleitung ist dabei nicht nur eine Leitung zwischen der Warmwasserquelle und der Zapfstelle zu verstehen. Der bestimmte Fluß kann auch in einer Kaltwasserzufuhr für die Warmwasserquelle ermittelt werden. Mittels eines Durchflußsensors wird der Fluß in der Speiseleitung erfaßt und ausgewertet. Liegt ein bestimmter Meßwert für den Fluß vor, ist zum Beispiel ein Schwellwert überschritten, so wird ein Flußsignal an die Steuereinrichtung abgegeben. Dieses Signal löst die Reaktion der Steuereinrichtung aus, die die erste Phase beendet und die zweite einleitet.

Das Flußsignal gibt eine Aussage über den Durchfluß in der Speiseleitung, zum Beispiel ob ein Schwellwert überschritten wurde. Dabei kann das Flußsignal einen Durchflußwert liefern, anzeigen, wie weit der Durchfluß über einem Schwellwert liegt, oder lediglich angeben, daß der Durchfluß über dem Schwellwert liegt. Wichtig ist lediglich, daß das Flußsignal geeignet den Durchfluß codiert. Im folgenden wird von einem binären Signal ausgegangen, das durch einen Betriebspegel (High-Pegel) angibt, daß der Durchfluß über einem Schwellwert liegt. Bei Ruhepegel (Low-Pegel) des Flußsignals liegt der Durchfluß unter dem Schwellwert. Der Durchflußsensor arbeitet dann als Durchflußwächter.

Zwei wesentliche Parameter der zweiten Phase stellen die Pumpzeit und die Totzeit dar. Während der Pumpzeit ist die Umwälzpumpe aktiv. Als Pumpzeit wird deshalb vorzugsweise derjenige Zeitraum gewählt, der benötigt wird, um das eventuell erkaltete Wasser in der Ringleitung so weit umzupumpen, daß an jeder Zapfstelle Warmwasser ansteht. Natürlich kann, wenn nur eine teilweise Bevorratung von warmen Wasser in der Speiseleitung gewünscht wird, auch eine kürzere Pumpzeit gewählt werden.

Ein längerer Zeitraum ist nicht zwingend erforderlich, weil ein noch während der Pumpzeit oder unmittelbar danach einsetzender Warmwasserverbrauch seinerseits dafür sorgt, daß Warmwasser in das Wasserleitungssystem nachströmt; er ist aber prinzipiell möglich. Das Flußsignal ist innerhalb der Pumpzeit ohne Wirkung und kann die Pumpzeit nicht verlängern, so daß ein unnötiger Betrieb der Umwälzpumpe und damit ein entbehrlicher Energieverbrauch vermieden ist.

Die so bemessene Pumpzeit, die je nach Größe der Wasserversorgungseinrichtung, d.h. je nach Volumen der Speiseleitung, etwa zwischen einer halben Minute und 10 Minuten liegt, sorgt außerdem dafür, daß unabhängig vom Umfang einer Wasserentnahme an einer Zapfstelle das eventuell erkaltete Leitungsnetz durch den Betrieb der Umwälzpumpe mit Warmwasser aufgefüllt wird. Durch den Umwälzpumpenbetrieb erfolgt auch bei einer nur geringen Wasserentnahme ein möglichst schnelles Bereitstellen von Warmwasser. Die Zeitdauer, die vergeht, bis bei einem erkalteten Leitungsnetz an einer Zapfstelle warmes Wasser vorliegt, ist also unabhängig vom tatsächlichen Wasserverbrauch.

Die Pumpzeit bewirkt weiter, daß bei einer erneuten Wasserentnahme sofort warmes Wasser zur Verfügung steht. Diese Wirkung kann ein Warmwasserverbraucher gezielt durch eine nur kurze Entnahme von Wasser aus der Warmwasserleitung erreichen. So kann ein Benutzer bei Betreten des Bades kurz den Warmwasserhahn öffnen, um sicherzustellen, daß kurze Zeit später warmes Wasser bereitsteht, zum Beispiel zum Duschen. Die Erfindung ermöglicht es, von jeder Warmwasserstelle aus die Umwälzpumpe zu starten, ohne daß dazu separate gebäudetechnische Installationen zu den Zapfstellen hin nötig wären. Insbesondere ist es nicht erforderlich, besondere Signalleitungen zu verlegen oder Detektoren an bzw. bei Warmwasserzapfstellen vorzusehen.

Der an die Pumpzeit, also an den ersten Abschnitt der zweiten Phase, unmittelbar anschließende zweite Abschnitt, die Totzeit, ist von Bedeutung, da die Umwälzpumpe das in der Ringleitung befindliche Wasser in Bewegung setzt und dieses auch nach Abschalten der Umwälzpumpe noch einige Zeit in der Ringleitung umlaufen kann. Die Umwälzpumpe erzeugt also einen Fluß in der Ringleitung, dessen Detektion ein erneutes Einschalten bewirken könnte. Die Totzeit beseitigt wirksam und mit verblüffend einfachen Mitteln die Gefahr einer solchen Rückkopplung, die sofort zum Wiedereinschalten der Umwälzpumpe führen könnte.

Die Totzeit ist also erfindungsgemäß abhängig vom Abklingen des durch die Umwälzpumpe in der Ringleitung erzeugten Flusses gewählt, um die Rückkopplungsgefahr zu vermeiden. Die Rückkopplung könnte ansonsten vermieden werden, indem eine bezogen auf die Förderleistung der Umwälzpumpe hohe Einschaltschwelle des Durchflußsensors gewählt wird, bei der eine Reaktion der Steuereinrichtung erfolgt. Die Leistung der Umwälzpumpe wäre dabei auf ein niedriges Niveau begrenzt, das zu langen Wartezeiten führen würde, bis Warmwasser an einer Zapfstelle ansteht. Eine Vermeidung der Rückkopplung durch eine hohe Einschaltschwelle verknüpft den Fluß, der durch eine die Umwälzpumpe einschaltende Wasserentnahme hervorgerufen wird, mit dem Fluß, den eine Umwälzpumpe maximal erzeugen darf.

Die Erfindung vermeidet diese Verknüpfung, indem sie jeglichen Pumpenbetrieb für die Dauer der Totzeit verhindert. Während der Totzeit kann die durch die Umwälzpumpe erzeugte Zirkulation in der Ringleitung soweit abklingen, daß sie kein Flußsignal auf Betriebspegel mehr verursacht. Die Umwälzpumpe kann somit nun leistungsstark ausgelegt werden, wodurch Warmwasser schnell bereitsteht. Gleichzeitig kann die Steuerung auch auf sehr kleine Warmwasserentnahmen hin die Umwälzpumpe einschalten.

Wie die Totzeit erzeugt wird, ist unerheblich. Entscheidend ist lediglich die Existenz eines abhängig vom Abklingen des Flusses gewählten Zeitraums in unmittelbarem Anschluß an die Pumpzeit, in dem der Pumpenbetrieb gesperrt ist, damit während dieses Zeitraums der Fluß in der Ringleitung ausreichend abklingen kann. Daher sind verschiedene Möglichkeiten vorstellbar, eine Totzeit zu erzeugen. So kann sie dadurch entstehen, daß die Flußsignale grundsätzlich getaktet an die Steuereinrichtung abgegeben werden. Die Totzeit entspricht dann der Taktdauer. Sie kann aber auch durch die Steuereinrichtung in der zweiten Phase der Pumpzeit nachgeschaltet werden. Wenn in der zweiten Phase der Durchflußsensor zwar Flußsignale abgibt, diese aber keinen Einfluß auf die Steuereinrichtung haben, ist ebenfalls eine Totzeit bewirkt und Veränderungen des Flusses während des Pumpenbetriebs bleiben ohne Auswirkungen auf die Steuerung.

Durch die Totzeit können auch leistungsstarke Pumpen zum Einsatz kommen, die das Wasser mit maximaler Geschwindigkeit und damit weit über einem Einschaltwert in der Ringleitung umpumpen. Die Einschaltschwelle der Steuerung bleibt vollkommen unberührt von der Pumpleistung und kann beliebig fein, zum Beispiel nahe einem Null-Fluß, gewählt werden. Das Nachschalten einer Totzeit ermöglicht eine nahezu beliebig niedrige Einschaltschwelle bei maximaler Pumpleistung. Dies ist vorteihaft, weil durch den Einsatz leistungsstarker Pumpen sich die Wartezeit, bis an einer Zapfstelle Warmwasser gezapft werden kann, drastisch verkürzt. Ein typischer Wert der Totzeit liegt deutlich unter 10 Minuten, beispielsweise unter 5 Minuten oder noch geringer. Bei herkömmlichen Umwälzpumpen, wie sie gegenwärtig üblicherweise eingesetzt werden, kann sogar eine Totzeit von 2 Minuten oder sogar 1 Minute oder 30 Sekunden genügen.

Die Totzeit ist abhängig vom Abklingverhalten des durch die Umwälzpumpe in der Ringleitung während der Betriebsphase erzeugten Flusses gewählt. Vorzugsweise ist die Dauer der Totzeit aus der Abklingzeit der Strömung in der Ringleitung bestimmt und deshalb im wesentlichen von der Leitungslänge der Ringleitung und der Leistung der Umwälzpumpe abhängig und auf diese Parameter eingestellt. Dazu ist die Kenntnis der Parameter erforderlich. Während die Leistung der Umwälzpumpe in aller Regel bekannt ist, kann die Leitungslänge, zum Beispiel bei Altbauten, manchmal nur schwer ermittelt werden. Die Bestimmung der Totzeit kann dann erst bei der Montage der Steuereinrichtung manuell oder empirisch erfolgen.

Besonders vorteilhaft ist dann eine automatische Bestimmung, die die Steuereinrichtung selbst vornimmt. Dazu schaltet die Steuereinrichtung als ersten Schritt nach ihrer Inbetriebnahme die Umwälzpumpe selbständig, also ohne einen Betriebspegel des Flußsignals, ein, betreibt sie für die Dauer der Pumpzeit, schaltet sie danach wieder ab, mißt die Abklingzeit bis die Strömung in der Ringleitung unter einen Schwellwert fällt und speichert diesen oder einen größeren Wert als Totzeit. Damit läßt sich nicht nur ein erheblicher Aufwand zur Bestimmung der Totzeit einsparen, sondern auch die Totzeit jederzeit an veränderte Verhältnisse innerhalb des Wasserversorgungssystems anpassen, zum Beispiel, wenn eine Umwälzpumpe gegen eine solche anderer Leistung ausgetauscht wurde.

Natürlich kann eine automatische Bestimmung der Totzeit nicht nur einmalig, z.B. bei der Erstinstallation des Systems vorgenommen werden. Es ist auch möglich, die Totzeit dynamisch zu wählen, indem das Flußsignal des Durchflußwächters überwacht wird und bei einer Schwellwertunterschreitung, d.h. wenn der Fluß in der Zirkulationsleitung einen gewissen Flußwert unterschreitet, die Totzeit zu beenden.

Eine solche dynamische Totzeitgestaltung läßt sich besonders vorteilhaft dann anwenden, wenn der Schwellwert, unter den der Fluß in der Zirkulationsleitung sinken muß, mit demjenigen Wert verknüpft wird, der zum Einschalten der Pumpe, d.h. zum Festlegen des Beginns der Pumpzeit verwendet wird. Durch diese vorteilhafte Ausgestaltung ist sichergestellt, daß eine unerwünschte Rückkopplung, die zu einem Wiedereinschalten der Pumpe kurz nach Ende der Pumpzeit führen würde, verhindert ist. Zugleich kann mit dieser Ausgestaltung auf sichere Weise ein nahezu beliebig geringer Flußwert für die Inbetriebnahme der Umwälzpumpe gewählt werden.

Mit dem Ende der Totzeit findet die zweite Phase der Steuerung ihren Abschluß. In der daran wieder anschließenden erste Phase reagiert die Steuereinrichtung auf einen Fluß in der Speiseleitung. Dies kann durch eine Wasserentnahme schon kurz nach Ende der Totzeit der Fall sein. Zu diesem Zeitpunkt ist jedoch oftmals ein Einschalten der Umwälzpumpe entbehrlich, weil das Wasser in der Speiseleitung noch nicht abgekühlt ist. Vor allem bei leistungsstarken Umwälzpumpen sollte vorzugsweise ein derartiger überflüssiger Betrieb vermieden werden. Daher wird für die Dauer der Totzeit vorteilhafterweise noch berücksichtigt, ob die Temperatur des Warmwasser in der Speiseleitung bis auf eine wählbare Mindesttemperatur abgesunken ist. Auch diese Abkühlzeit kann vor Ort empirisch oder durch ein Programm der Steuereinrichtung automatisch ermittelt werden. Dazu wird vom Verbraucher oder Installateur eine Temperatur vorgegeben, oberhalb der kein weiterer Betrieb der Umwälzpumpe erfolgen soll. Die Steuereinrichtung erfaßt dann die Wassertemperatur in der Ringleitung und beendet die Totzeit erst, wenn die gewählte Temperatur erreicht ist. Optional kann diese Zeitdauer auch manuell gemessen und zur Einstellung der Totzeit berücksichtigt werden. Die Berücksichtigung der Temperatur verhindert ein unnötiges Einschalten der Umwälzpumpe zu einem Zeitpunkt, zu dem noch ausreichend warmes Wasser an den Zapfstellen vorliegt. Die Temperatur ist vorzugsweise separat stellbar, insbesondere nicht abhängig von einer ersten Inbetriebnahme der Steuereinrichtung. Somit wird die Totzeit vorzugsweise betriebsabhängig verändert, wenn sich durch die ständige Temperaturmessung die Totzeit, zum Beispiel wegen erneuter Warmwasserentnahme, verlängert.

Die Erfindung kommt mit einem minimalen gerätetechnischen Aufwand aus, um ein bedarfsgerechtes und energiesparenes Steuergerät für eine Umwälzpumpe zu verwirklichen. Sie benötigt in einer Mindestkonfiguration lediglich einen Durchflußsensor als Sensor und eine Steuerung. Außerdem ist sie flexibel in der Anordnung ihre Bestandteile, was vor allem für eine Nachrüstung vorteilhaft ist. Der Durchflußsensor kann an jeder Stelle des Wasserversorgungseinrichtung eingebaut sein, an der er einen Fluß infolge einer Warmwasserenthahme erfassen kann. Genauso wenig festgelegt ist die Lage der Steuereinrichtung, die vorzugweise zur einfachen Installation in der Nähe der Umwälzpumpe oder einer Stromquelle angeordnet werden wird.

Die Zeitdauern von Pump- bzw. Totzeit werden in Abhängigkeit von Parametern des Wasserversorgungssystem, insbesondere der Leitungslänge der Ringleitung, gewählt. Weil sich aber auch noch nach Einbau des Steuergeräts Parameter des Warmwasserversorgungsystems ändern können, zum Beispiel durch den Ausbau des Wasserleitungsnetzes, ist es vorteilhaft, wenn die Dauer der Pump- und/oder der Totzeit verstellbar ist bzw. sind. Dies kann, wie erwähnt, durch ein Programm der Steuereinrichtung geschehen, oder auch durch eine manuelle Einstellmöglichkeit. Letztere hat den Vorteil, daß sich mit ihr das Steuergerät jederzeit und auf einfachste Weise veränderten Gegebenheiten anpassen und gegebenenfalls nachjustieren läßt.

Die Lage der Steuereinrichtung bezüglich Umwälzpumpe und Durchflußsensor ist prinzipiell beliebig. Um möglichst kurze Wege für die Schaltsignale der Steuereinrichtung zu erzielen, wird sie gewöhnlich möglichst nahe der Umwälzpumpe angeordnet. Nach einer vorteilhaften Ausgestaltung der Erfindung wird die Steuereinrichtung von einem Gehäuse aufgenommen, das von dem an der Speiseleitung befestigten Durchflußsensor getragen ist. Steuereinrichtung und Durchflußsensor bilden somit auch räumlich eine Einheit. Die Montage beider Geräte erfordert nur noch einen Arbeitsschritt, in dem lediglich der Durchflußsensor an der Ringleitung befestigt, und die Steuereinrichtung am Stromnetz angeschlossen wird. Eine separate Befestigung der Steuereinrrichtung und elektrische Installationen zur Verbindung beider Aggregate fallen weg. Zudem ist durch die bauliche Einheit der Übertragungsweg des Flußsignals vom Durchflußsensors zur Steuereinrichtung vor äußeren Einflüssen geschützt und damit eine störungsfreie Übertragung sichergestellt. Auf diese Weise ist eine Baueinheit erreicht, die lediglich an einem Wasserrohr der Speiseleitung befestigt werden muß.

In einer besonders einfachen Ausführungsform weist der Durchflußsensor an oder nahe einem Signalausgang eine Grundplatte auf, an der das Gehäuse der Steuereinrichtung befestigt ist. Auch kann das Gehäuse einen Stecker, mit dem die Steuereinrichtung an die örtliche Stromversorgung angeschlossen wird, und eine Buchse, in die ein Stecker zur Stromversorgung der Umwälzpumpe eingesteckt werden kann, umfassen. Damit ist eine Bauform erreicht, die geringstmöglichen Installationsbedarf für die Montage von Durchflußsensor und Steuereinrichtung erfordert.

Als Durchflußsensor können zum Beispiel Druckänderungssensoren oder Temperaturfühler zum Einsatz kommen. Genauer arbeiten dagegen Einrichtungen, die den Durchfluß unmittelbar erfassen. Dazu wird zum Beispiel ein in einem Rohrabschnitt der Speiseleitung drehbar gelagertes Flügelrad abgefühlt. Die Umdrehungsgeschwindigkeit des Flügelrades dient dann als Maß für den Fluß in der Speiseleitung. Allerdings sind solche bewegliche Teile in Wasserleitungen und insbesondere ihre Lager aufwendig unt teuer. Daher ist es vorteilhaft, einen kostengündtigeren Paddeldurchflußsensor mit einem in einen Rohrabschnitt der Speiseleitung ragenden Paddel einzusetzen, das in Abhängigkeit vom Fluß im Rohrabschnitt eine detektierbare Auslenkung erfährt, die zu einem Flußsignal verarbeitet wird. Ein derartiger Durchflußsensor hat einen mechanisch einfachen Aufbau und ist äußerst wartungsarm.

Als problematisch an einem Durchflußsensor erweist sich regelmäßig die Durchführung eines mechanischen oder elektrischen Flußsignals aus dem Druckwasserbereich heraus. Dies begegnet in der Regel Abdichtungsschwierigkeiten. Außerdem unterliegen Dichtungen einem Alterungsprozeß, der zu Wartungsbedarf führt. Daher ist es besonders vorteilhaft, wenn die Paddelstellung kontaktlos abgetastet wird, zum Beispiel mittels eines an einer Seite des Paddels angeordneten Magneten. Eine Auslenkung des Paddels kann dann über die Lage des Magneten von außerhalb des wasserführenden Bereichs des Durchflußsensors kontaktlos abgefühlt werden.

Das Abfühlen der Lage des Magneten erfolgt besonders einfach durch einen Reed-Schalter mit zwei Schaltzuständen, die dem erwähnten Betriebs- und Ruhepegel zugeordnet sind. Der Schaltzustand richtet sich dabei nach der Lage des Magneten. Der Wechsel von einem zum anderen Schaltzustand definiert die Einschaltschwelle der Steuerung. Die Justierung des Reed-Schalters gegenüber dem Magneten als Definition der Einschaltschwelle ist dann wichtig für die Steuerung der Umwälzpumpe und wird bei der Befestigung des Reed-Schalters auf der Gehäusewandung des Durchflußsensors festgelegt. Dabei ist der Reed-Schalter vorzugsweise verstellbar gegenüber dem Magneten angebracht, damit die Einschaltschwelle justiert werden kann. Durch den Einsatz eines Reed-Schalters ist somit nicht nur das Dichtungsproblem gelöst, sondern auf einfache Weise auch noch eine Anpaßbarkeit des Steuergeräts an die jeweiligen Gegebenheiten im Wasserversorgungssystem erreicht, da durch Veränderung der Einbaulage des Reed-Schalters die Einschaltschwelle verstellt werden kann.

Eine besonders vorteilhafte Bauweise des Steuergeräts ergibt sich, wenn der Reed-Schalter in dem die Steuereinrichtung aufnehmenden und vom Durchflußsensor getragenen Gehäuse angeordnet ist. Er ist damit vor schädigenden äußeren Einflüssen geschützt und vorzugsweise unmittelbar elektrisch mit der Steuereinrichtung verbunden. Außerdem kann er bereits werkseitig geeignet vorjustiert sein, so daß nach der Montage des Steuergeräts in der Wasserversorgungseinrichtung nur noch geringe oder keine Justagearbeit erforderlich ist.

Wie alle Teile eines Warmwasserversorgungsnetzes ist auch ein Durchflußsensor der Verkalkung ausgesetzt. Dies kann eine bewegliche Lagerung außer Funktion setzen. Abhilfe kann geschaffen werden, indem die Lagerung außerhalb des wasserführenden Gehäuses des Durchflußsensors angeordnet ist. Dies ist jedoch nur mit Abdichtungen zu erreichen, die bei beweglichen Teilen besonderen Aufwand erfordern. Eine demgegenüber sehr vorteilhafte Lagerung ist dadurch erreichbar, daß im Durchflußsensor eine Lagerung mittels einer Feder erfolgt. Die Verwendung einer Feder erreicht eine besondere Unempfindlichkeit gegenüber Kalkablagerungen, da aufgrund der ständigen Biegungsänderung der Feder bei jeder Bewegung ein Aufbau dickerer Kalkschichten ausgeschlossen ist. Eine solche Federlagerung eignet sich insbesondere für den erwähnten Paddelsensor und kann dort als Blattfeder ausgeführt werden.

Prinzipiell ist es möglich, nicht nur die Umwälzpumpe und das Steuergerät, sondern auch Bestandteile des Steuergeräts, etwa Steuereinrichtung und Durchflußsensor, als voneinander getrennte Aggregate auszubilden und damit eine möglichst große Flexibilität für den Einbau, zum Beispiel bei einer Nachrüstung, zu erreichen. Dieser Vorteil führt jedoch zu einem höheren Montageaufwand. Um ihn vor allem im Fall einer Erstausrüstung zu verringern, ist es daher vorteilhaft, den umgekehrten Weg zu beschreiten und den Durchflußsensor an den Pumpenzu- bzw. -ablauf der Umwälzpumpe zu koppeln. Neben Einsparungen bei der Montagezeit ergibt sich damit auch eine wesentlich kompaktere Bauform für Umwälzpumpe und Steuergerät.

Eine noch kompaktere Bauform erzielt man, wenn das Steuergerät mit der Umwälzpumpe in einem gemeinsamem Gehäuse untergebracht ist. Damit ist geringstmöglicher Installationsaufwand für Umwälzpumpe und Steuergerät erreicht.

Die Verwirklichung einer derartigen kompakten Ausgestaltung ist besonders einfach bei der Verwendung einer Umwälzpumpe mit einem Rotor möglich. Ist der Rotor nicht mit einem Getriebe oder einem Motor der Umwälzpumpe verbunden, also frei drehbar, so zeigt er wie ein Flügelrad eines Durchflußsensors einen Fluß in der Speiseleitung an. Wird in diesem Zustand des Rotors nun seine Bewegung erfaßt und zu einem Flußsignal verarbeitet, kann der separate Durchflußsensor eingespart und eine kostengünstigere Herstellung erzielt werden.

Gewöhnlich wird das Flußsignal des Durchflußsensors von der Steuereinrichtung zu einem Schaltsignal für die Umwälzpumpe verarbeitet. Dieses kann dann auf einen Ein- bzw. Ausschalter der Umwälzpumpe einwirken. Es ist jedoch vorteilhaft, wenn das Steuergerät bereits ein Signal abgibt, das zugleich die Energieversorgung der Umwälzpumpe bewirkt oder unterbindet, indem die Steuereinrichtung zwischen Stromquelle und Umwälzpumpe geschaltet ist. Damit läßt sich eine kostengünstige Steuereinrichtung bewerkstelligen.

Die Erfindung wird nachfolgend anhand von Zeichnungen im Prinzip beispielshalber noch näher erläutert. Es zeigen:
- Fig. 1: eine Warmwasserversorgungseinrichtung mit einer Umwälzpumpe;
- Fig. 2: ein Blockschaltbild zur Steuerung der Umwälzpumpe;
- Fig. 3: eine Draufsicht auf ein Steuergerät;
- Fig. 4: einen Schnitt durch das Steuergerät entlang einer Schnittlinie A-A;
- Fig. 5: eine Draufsicht auf das Steuergerät der Fig. 3, jedoch ohne Gehäusedeckel;
- Fig. 6: ein Schnitt durch das Steuergerät entlang einer Schnittlinie B-B;
- Fig. 7: ein Ablaufdiagramm der Steuerung, und
- Fig. 8: Zeitreihen zur Darstellung des Zusammenhangs zwischen Verbrauch an einer Zapfstelle, Pumpenbetrieb und Zirkulation in einer Ringleitung.

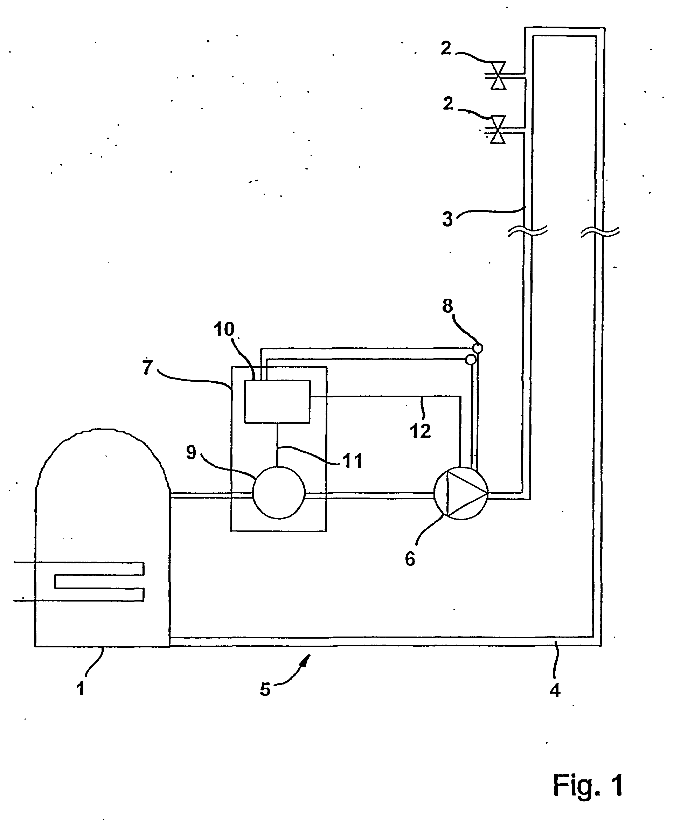

Die Warmwasserversorgungseinrichtung der Fig. 1 besteht aus einem Heizkessel 1, der Zapfstellen 2 über eine Speiseleitung 3 mit Warmwasser versorgt. Von den Zapfstellen 2 führt eine Rückleitung 4 zurück zum Heizkessel 1. Die Speiseleitung 3 und die Rückleitung 4 bilden zusammen eine Ringleitung 5 von und zum Heizkessel 1. An einer beliebigen Stelle der Ringleitung 5 ist eine Umwälzpumpe 6 angeordnet, die von einem Steuergerät 7 über eine Schaltleitung 12 angesteuert wird. Bei der Warmwasserversorgungseinrichtung der Fig. 1 ist es unerheblich, an welcher Stelle der Ringleitung 5 die Umwälzpumpe 6 geschaltet ist. So kann sie abweichend von der Darstellung in Fig. 1 auch in der Rückleitung 4 angeordnet sein.

Sowohl die Umwälzpumpe 6 als auch das Steuergerät 7 sind an eine Stromquelle 8 angeschlossen. Das Steuergerät 7 umfaßt eine Steuereinrichtung 10 und einen Durchflußwächter 9, der den Fluß in der Speiseleitung 3 mißt und bei Meßwerten über einem bestimmten Schwellwert über eine Signalleitung 11 ein Flußsignal an die Steuereinrichtung 10 abgibt. Die Lage des Durchflußwächters 9 innerhalb der Ringleitung 5 ist frei wählbar, solange er einen Durchfluß in der Speiseleitung 3 infolge einer Wasserentnahme an einer der Zapfstellen 2 erfaßt. Er ist damit insbesondere nicht abhängig von der Lage der Umwälzpumpe 6.

Sind die Zapfstellen 2 geschlossen, so steht das Warmwasser in der Speiseleitung 3 und kühlt dadurch mit der Zeit ab, so daß nach einer gewissen Zeit an den Zapfstellen 2 abgekühltes Wasser ansteht. Würde nun an einer Zapfstelle Warmwasser entnommen, müßte zuerst das in der Speiseleitung 3 befindliche erkaltete Wasser gezapft werden, bis Warmwasser aus dem Heizkessel 1 nachgeflossen ist. Dies wird durch den Betrieb der Umwälzpumpe 6 vermieden, die das Wasser in der Ringleitung 5 umwälzt.

Beim Öffnen der Zapfstelle 2 fließt Wasser in der Speiseleitung 3. Der Durchflußwächter 9 erfaßt dies und gibt ein Flußsignal mit schwellwertabhängigem Betriebspegel über die Signalleitung 11 an die Steuereinrichtung 10 ab. Springt das Flußsignal des Durchflußwächters 9 auf Betriebspegel, so schaltet die Steuereinrichtung 10 die Umwälzpumpe 6 für eine fest vorgegebene, vom weiteren Pegel des Flußsignals unabhängige Pumpzeit ein. Unabhängig davon, ob und wieviel Wasser an der Zapfstelle 2 entnommen wird, wälzt die Umwälzpumpe 6 dann das Wasser in der Ringleitung 5 um, so daß bald an jeder Zapfstelle 2 Warmwasser ansteht.

Die Pumpzeit der Umwälzpumpe 6 ist dabei so bemessen, daß in dieser Zeit der Inhalt der Ringleitung 5 zumindest soweit umgepumpt wird, daß in der Speiseleitung 3 eine Warmwasserfront bis zu den Zapfstellen 2 gelangt ist. Ein weiterer Betrieb der Umwälzpumpe 6 ist dann nicht mehr erforderlich, weil entweder an den Zapfstellen 2 kein Warmwasser mehr entnommen wird, oder, wenn es noch entnommen wird, weil die Wasserentnahme selbst den Fluß des Warmwassers in der Speiseleitung 3 aufrecht erhält.

Daher sperrt nun die Steuereinrichtung 10 nach Ablauf der Pumpzeitdauer den Betrieb der Umwälzpumpe 6 für die Dauer einer ebenfalls vom weiteren Pegel des Flußsignals unabhängigen Totzeit. Die Totzeit ist so bemessen, daß die durch den vorhergehenden Betrieb der Umwälzpumpe 6 angetriebene Wasserzirkulation in der Ringleitung 5 ausreichend, zum Beispiel vollständig, abklingt. Erst nach Ablauf der Totzeit, die z.B. zwischen 20 sec und 5 min dauern kann, schaltet die Steuereinrichtung 10 die Umwälzpumpe 6 wieder auf einen Einschaltpegel, wenn ein Betriebspegel des Flußsignals des Durchflußwächters 9 auftritt.

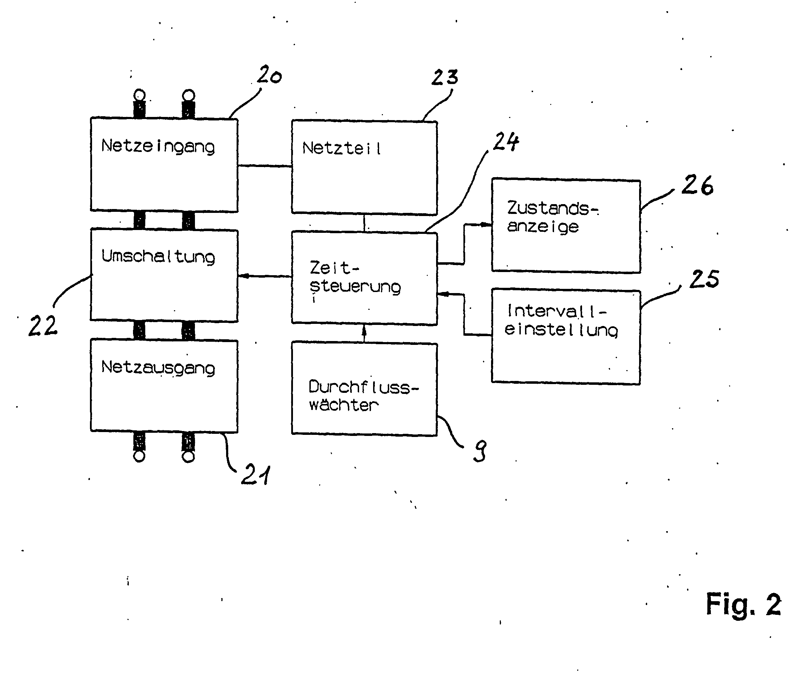

Der Aufbau der Steuereinrichtung 10 ist schematisch in der Fig. 2 dargestellt: die Steuereinrichtung 10 umfaßt einen Netzeingang 20, einen Netzausgang 21, einen Schalter 22, ein Netzteil 23, eine Zeitsteuerung 24, eine Einheit 25 für die Intervalleinstellung und eine Zustandsanzeige 26. Zwischen dem Netzeingang 20 und dem Netzausgang 21, der einen Netzeingang der Umwälzpumpe 6 darstellt, ist der Schalter 22 angeordnet. Nach dessen Schaltstellung richtet sich der Ein- bzw. Ausschaltpegel der Umwälzpumpe 6. Anders als bei der Steuereinrichtung der Fig. 1 steuert die Steuereinrichtung 10 der Fig. 2 also die Umwälzpumpe 6, indem sie deren Stromversorgung ein- oder ausschaltet.

Das Netzteil 23 versorgt die Zeitsteuerung 24 mit Strom aus dem Netzeingang 20. Auf die Arbeitweise der Zeitsteuerung 24 wird später noch genauer eingegangen. Sie wirkt auf die Schaltstellung des Schalters 22 ein, wobei dies abhängig vom Pegel des Flußsignals des Durchflußwächters 9 und einer Intervalleinstellung 25 für die Pumpzeit erfolgt. Außerdem gibt die Zeitsteuerung 24 die Schaltstellung des Schalters 22 und damit den Betriebszustand der Umwälzpumpe 6 über eine Zustandsanzeige 26 an.

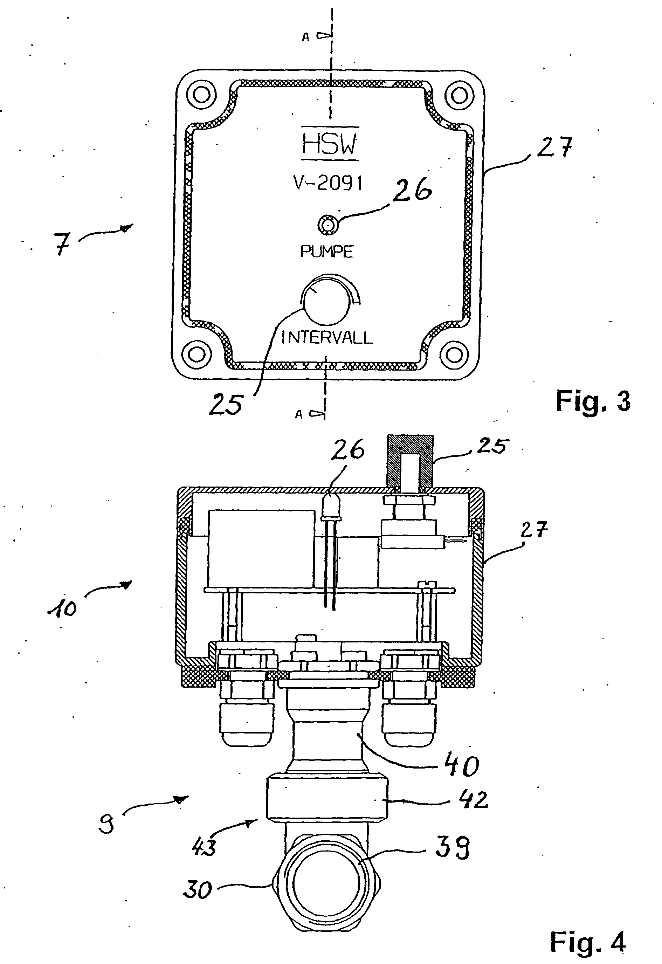

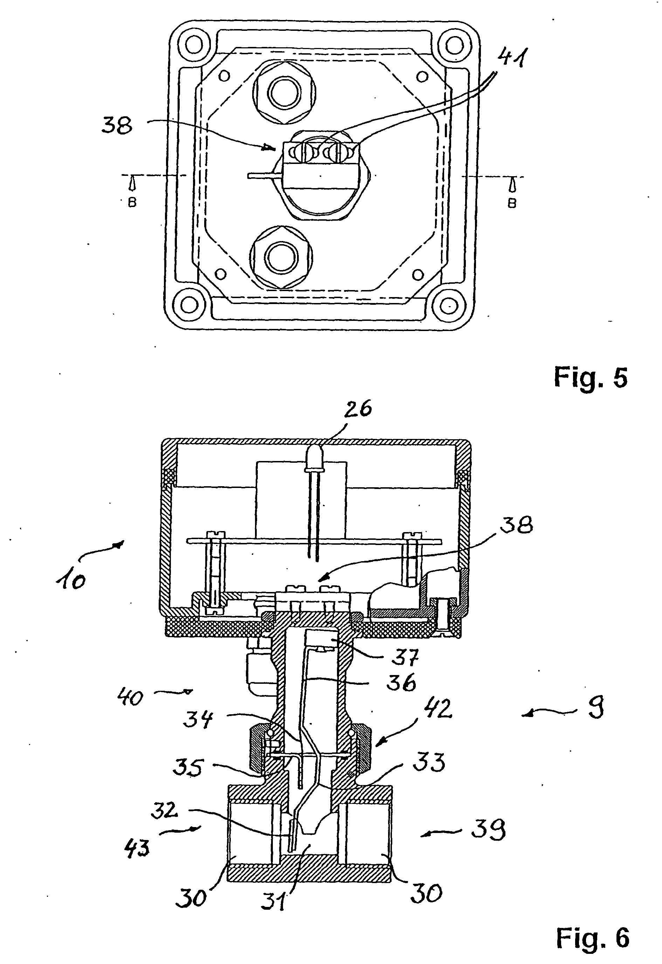

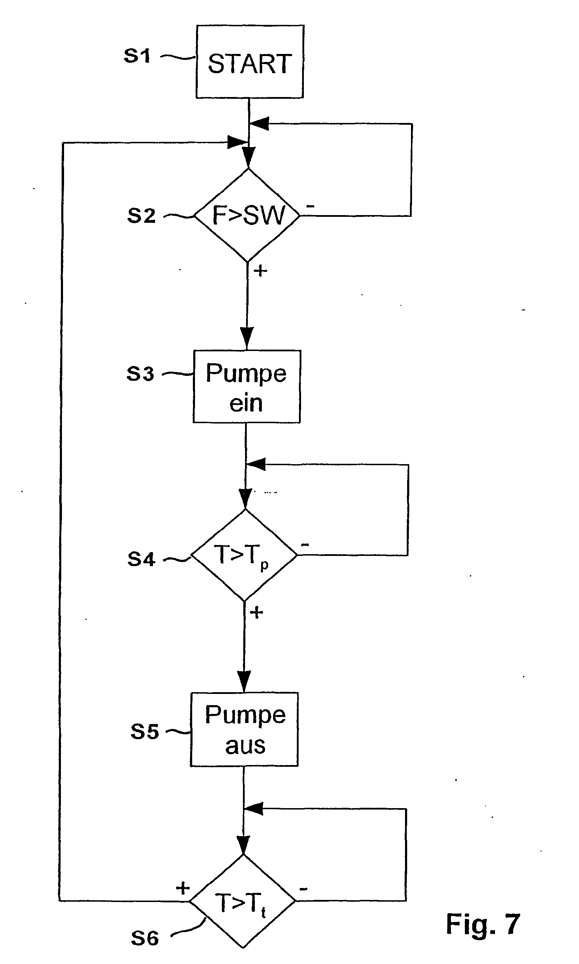

Ein Ausführungsbeispiel für ein Steuergerät 7 zeigen die Fig. 3 bis 6: Das Steuergerät 7 umfaßt die Steuereinrichtung 10 und den Durchflußwächter 9. Als Durchflußwächter 9 dient ein Paddeldurchflußsensor mit einem Gehäuse 43 aus einem unteren Abschnitt 39 und einem oberen Abschnitt 40, der direkt an ein Gehäuse 27 der Steuereinrichtung 10 angeflanscht ist. Auf seiner dem Durchflußwächter 9 abgewandten Seite weist das Gehäuse 27 eine LED als Zustandsanzeige 26 und einen Potentiometer als Einheit 25 für die Intervalleinstellung auf.

Der Durchflußwächter 9 besitzt in seinem unteren Abschnitt 39 zwei Anschlußmuffen 30 und einen diese verbindenden Abschnitt 31, mit dem der Durchflußwächter 9 in die Ringleitung 5 geschaltet wird. In den Verbindungsabschnitt 31 ragt ein unteres Ende 32 eines Paddels 33. An einem dem unteren Ende 32 gegenüberliegenden oberen Ende 36 weist das Paddel 33 einen Magneten 37 auf, dessen Lage von einem im Gehäuse 27 der Steuereinrichtung 10 angeordneten Reed-Schalter 38 berührungslos abgefühlt wird.

Das Paddel 33 ist über eine Blattfeder 34 drehbar an einem Halter 35 gelagert. Dieser ist fest mit dem Gehäuse 43 des Durchflußwächters 9 verbunden, vorzugsweise indem er an einer Fügestelle 42 zwischen dem unteren Abschnitt 39 und dem oberen Abschnitt 40 dichtend eingeklemmt ist. Halter 35 und Blattfeder 34 stellen eine einfache drehbare Lagerung des Paddels 33 dar, die aufgrund weniger bewegter Teile unanfällig gegen Verkalkung ist. Die Blattfeder 34 verhindert eine Kalkschichtbildung, weil eine Biegungsänderung der Blattfeder 34 infolge einer Paddelauslenkung dickere Kalkschichten abplatzen läßt.

Die Härte der Blattfeder 34 bestimmt die Kraft, mit der die Wasserströmung gegen das untere Ende 32 des Paddels 33 drücken muß, um eine Auslenkung des Paddels 33 zu erzeugen. Sie legt eine Ansprechschwelle des Durchflußwächters 9 für den Wechsel von Ruhe- auf Betriebspegel fest. Eine weitere Einstellmöglichkeit besteht darin, das Verhältnis von Anströmfläche des unteren Endes 32 des Paddels 33 zum Querschnitt des Verbindungsabschnitts 31 zu variieren. Beide Größen lassen sich durch Austausch der jeweiligen Bauteile verändern. Ein Austausch der Blattfeder 34 und des Halters 35 ist besonders einfach zu bewerkstelligen, weil der Halter 35 an der Fügestelle 42 zwischen dem oberen Abschnitt 40 und dem unteren Abschnitt 39 angeordnet und gleichzeitig mit einem Verbinden der beiden Abschnitte 34, 35 in dem Gehäuse gehalten bzw. beim Trennen der beiden Abschnitte 34, 35 voneinander gelöst ist.

Eine weitere, einfache Verstellmöglichkeit der Ansprechschwelle des Durchflußwächters 9 erfolgt über die Befestigung des Reed-Schalters 38. Er ist im Gehäuse 27 in zwei Langlöchern 41 verschieblich gegenüber dem Magneten 37 befestigt. Durch Verschieben des Reed-Schalters 38 kann nun die Lage des Magneten 37, in der der Reed-Schalter 38 anspricht, verändert werden. Auf diese Weise ist die Einschaltzeitpunkt des Reed-Schalters 38 und damit ein Schwellwert SW, oberhalb dem der Durchflußwächter 9 ein Flußsignal auf Betriebspegel setzt, einstellbar und auch nachträglich noch verstellbar. Weil der Reed-Schalter 38 die Lage des Magneten 37 durchführungslos und kontaktfrei abfühlt, sind außerdem zu Undichtigkeiten neigende Durchführungen vermieden.

Die Funktionsweise des Steuergerätes 7 ist in einem Ablaufdiagramm in Fig. 7 dargestellt. Die Inbetriebnahme des Steuergerätes 7 markiert einen Startschritt S1. Dann wird in der Ringleitung 5 kontinuierlich der Durchfluß erfaßt, und in einem Schritt S2 mit einem vorgegebenen Schwellwert SW verglichen. Ist der erfaßte Wert für den Fluß in der Ringleitung 5 kleiner als der Schwellwert SW (_{"}-"-Verzweigung), so wird vor Schritt S2 zurückgesprungen. Ist der Schwellwert SW überschritten (_{"}+"-Verzweigung), so wird ein Flußsignal mit Betriebspegel an die Steuereinrichtung 10 abgegeben. Die Steuereinrichtung 10 schaltet dann in einem Schritt S3 ein Steuer- oder Schaltsignal auf einen Einschaltpegel, der gleichbedeutend ist mit einem Betrieb der Umwälzpumpe 6. Dieser Einschaltpegel wird in einem Schritt S4 für die Dauer einer vorgegebenen Pumpzeit Tp und unabhängig von der weiteren Entwicklung des Flußsignals aufrecht erhalten. Erst nach Ablauf der vorgegebenen Pumpzeit Tp schaltet die Steuereinrichtung 10 das Steuer- oder Schaltsignal auf einen Ausschaltpegel (Schritt S5), gleichbedeutend mit einem Ruhen der Umwälzpumpe 6. Der Ausschaltpegel wird während eines Schrittes S6 für die Dauer einer einstellbaren Totzeit Tt und ebenfalls unabhängig vom weiteren Verlauf des Flußsignals aufrechterhalten. Erst nach Ablauf der Totzeit Tt wird wieder vor Schritt S2 zurückgesprungen und die Steuereinrichtung 10 reagiert wieder auf das Flußsignal, so daß im Schritt S3 wieder ein Schalten auf den Einschaltpegel möglich ist.

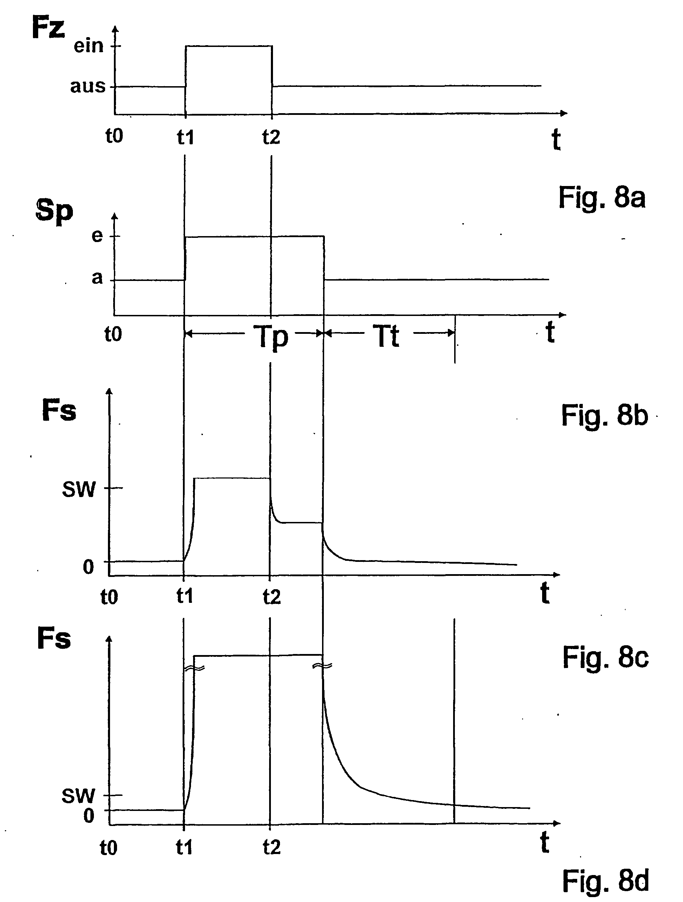

Das Zusammenwirken der Steuerung der Umwälzpumpe 6 mit einem Wasserverbrauch an der Zapfstelle 2 und der Bewegung des Warmwassers in der Speiseleitung 3 stellt Fig. 8 beispielhaft in vier Zeitreihen dar. Fig. 8a gibt einen Fluß Fz des Warmwassers zur Zapfstelle 2 während einer Zeit t an. Zwischen den Zeitpunkten t0 und t1 wird kein Warmwasser entnommen. Von Zeitpunkt t1 bis t2 ist die Zapfstelle 2 geöffnet. Nach dem Zeitpunkt t2 bleibt sie geschlossen.

Fig. 8b zeigt das Steuer- oder Schaltsignal Sp für die Umwälzpumpe 6 im selben Zeitabschnitt, und zwar den Ausschalpegel a und den Einschaltpegel e. Die Dauer, für die der Einschaltpegel e vorliegt, wird von der Pumpzeit Tp bestimmt. Die Dauer, für die das Schaltsignal Sp auf Ausschaltpegel ist, entspricht der Dauer der Totzeit Tt. Erst nach Ablauf der Totzeit Tt kann die Umwälzpumpe 6 wieder eingeschaltet werden.

In den Fig. 8c und 8d ist der Wert des Flusses Fs des Wassers in der Speiseleitung 3 dargestellt. Dabei ist in Fig. 8c ein Fall gezeigt, bei dem eine Wasserentnahme erfolgt, die einen Fluß in der Speiseleitung 3 erzeugt, der größer als der von der Umwälzpumpe 6 bewirkte ist und kürzer als die Pumpzeit andauert. Gleichzeitig ist die Umwälzpumpe 6 nur zu einem gegenüber der Wasserentnahme und gegenüber dem Schwellwert SW geringeren Fluß in der Lage. In Fig. 8d ist dagegen ein Fall dargestellt, bei dem die Umwälzpumpe 6 einen über dem Schwellwert SW liegenden Fluß Fs erzeugt.

In Fig. 8c wird zum Zeitpunkt t1 durch das Öffnen der Zapfstelle 2 ein Fluß Fs ausgelöst, der nach Schließen der Zapfstelle 2 zum Zeitpunkt t2 und bis zum Ablauf der Pumpzeit Tp durch den Betrieb der Umwälzpumpe 6, jetzt allerdings in geringerem Umfang, aufrecht erhalten wird. Nach Ausschalten der Umwälzpumpe 6 klingt der Fluß Fs in der Speiseleitung 3 ab. Ab dem Zeitpunkt t2 wird für die noch verbleibende Pumpzeit Tp ein Fluß Fs erzeugt, der betragsmäßig nur etwa halb so groß ist wie der durch eine Wasserentnahme an der Zapfstelle 2. Solche Flußverhältnisse liegen beim Einsatz von Umwälzpumpen mit niedriger Leistung vor. Sie sichern gegen ein ungewolltes Wiedereinschalten der Umwälzpumpe 6 dadurch, daß der Schwellwert SW über einem Fluß Fs angesetzt wird, den die Umwälzpumpe 6 selbst erzeugt und der somit einen Mindestwert angibt. Liegt der Schwellwert also über diesem Mindestwert, wird die Umwälzpumpe 6 infolge des Abklingens des Flusses nach Ende der Pumpzeit Tp wie beabsichtigt nicht eingeschaltet. Andererseits wird die Maximalhöhe des Schwellwerts SW durch den Fluß Fs infolge einer gewöhnlichen Wasserentnahme an einer Zapfstelle 2 bestimmt.

Ein Fluß Fs infolge des Betriebs der Umwälzpumpe 6 liegt dann unter dem einer die Umwälzpumpe aktivierenden Wasserentnahme. Damit ist die Leistung der Umwälzpumpe 6 also auf ein niedriges energiesparendes Niveau festgelegt, was allerdings eine längere Zeit bedingt, bis das Wasser in der Ringleitung 5 ausreichend umgewälzt ist.

Demgegenüber zeigt Fig. 8d ein Beispiel für einen Fluß Fs in der Speiseleitung infolge eines Betriebs einer leistungsstarken Umwälzpumpe 6. Ebenso wie in Fig. 8c steigt der Fluß Fs aufgrund einer Wasserentnahme an der Zapfstelle 2 und dem dadurch verursachten Betrieb der Umwälzpumpe 6 zum Zeitpunkt t1 stark an. Zum Zeitpunkt t2 ist die Wasserentnahme wieder beendet. Weil die Pumpzeit Tp aber über den Zeitpunkt t2 hinaus andauert, und der Fluß Fs in der Speiseleitung 3 infolge des Betriebs der Umwälzpumpe 6 stärker ist als durch die Wasserentnahme, verläuft der Fluß Fs auf einem gleichbleibend hohen Niveau über die gesamte Pumpzeit Tp.

Weil die Umwälzpumpe 6 das in der Ringleitung 5 befindliche Wasser in Bewegung setzt, läuft es auch nach Abschalten der Umwälzpumpe 6 noch einige Zeit in der Ringleitung 5 um. Dies zeigt das Abklingen des Flusses Fs in den Fig. 8c und 8d. Damit der abklingende Fluß Fs, der zum Teil noch über dem Schwellwert SW liegen kann, keine Rückkopplung bewirken kann, ist eine Totzeit Tt vorgesehen, in der die Umwälzpumpe 6 nicht eingeschaltet wird. Die Totzeit Tt verhindert ein ungewolltes Wiedereinschalten der Umwälzpumpe 6 infolge des durch die Umwälzpumpe 6 erzeugten, abklingenden Umlaufs des Wassers in der Ringleitung 5.

Die Fig. 8 machen deutlich, daß die Steuerung der Umwälzpumpe 6 mit einem Einschaltpegel während einer Pumpzeit Tp und einem Ausschaltpegel während einer Totzeit Tt unabhängig von einem innerhalb dieser Zeitintervalle erfolgenden Fluß Fs in der Speiseleitung 5 erfolgt. Damit die Umwälzpumpe 6 möglichst wenig läuft, ist die Pumpzeit Tp dabei so bemessen, daß das Wasser in der Ringleitung 5 nur solange umgepumpt wird, bis an jeder Zapfstelle 2 warmes Wasser ansteht. Ein länger dauernder Betrieb der Umwälzpumpe 6 ist nicht notwendig.

Die Totzeit Tt ermöglicht einen bezogen auf die Leistung der Umwälzpumpe nahezu beliebig geringen Schwellwert SW für den Fluß Fs. Er kann sogar gänzlich Null sein. Trotz niedrigen Schwellwerts SW ist damit auch der Einsatz einer Umwälzpumpe hoher Leistung möglich, die den Vorteil hat, daß das Wasser sehr schnell umgepumpt wird, also schnell Warmwasser an einer Zapfstelle 2 zur Verfügung steht. Dazu muß jedoch die Zirkulation in der Ringleitung 5 nach Betrieb der Umwälzpumpe 6 abklingen können, bevor der Fluß in der Speiseleitung 3 zum erneuten Einschalten der Umwälzpumpe 6 wieder ausgewertet wird. Die Totzeit sorgt dafür.

## Patentansprüche

1. Steuergerät für eine Umwälzpumpe (6) zum Einsatz in einer sanitären Wasserversorgungseinrichtung, bei der eine Warmwasserquelle (1) und eine Zapfstelle (2) über eine Speiseleitung (3) verbunden sind und von der Speiseleitung (3) eine Rückführleitung (4) zur Warmwasserquelle (1) besteht, so daß Speise- (3) und Rückführleitung (4) eine Ringleitung (5) bilden, und die Umwälzpumpe (6) in die Ringleitung (5) geschaltet ist, wobei das Steuergerät (7) aufweist:
- einen Durchflußsensor (9), der in die Speiseleitung (3) geschaltet ist und dort einen Durchfluß erfaßt und ein Flußsignal abgibt,
- eine Steuereinrichtung (10), die einen Schaltausgang aufweist, an dem ein Schaltsignal abgebbar ist, das bei einem Einschaltpegel einen Betrieb der Umwälzpumpe (6) und bei einem Ausschaltpegel ein Ruhen der Umwälzpumpe (6) bewirkt,
- wobei die Steuereinrichtung (10) in Abhängigkeit vom Flußsignal das Schaltsignal auf den Einschaltpegel setzt, diesen dann unabhängig vom Flußsignal Ober eine Pumpzeitdauer beibehält, dann auf den Ausschaltpegel setzt und diesen für die Dauer einer Totzeit beibehält und erst nach Ablauf der Totzeit einen Wechsel auf den Einschaltpegel ermöglicht,
**dadurch gekennzeichnet, daß** die Steuereinrichtung (10) die Totzeit beendet, wenn das Flußsignal unter einen Schwellwert fällt.

2. Steuergerät nach Anspruch 1, **dadurch gekennzeichnet, daß** die Steuereinrichtung (10) das Schaltsignal auf den Einschaltpegel setzt, wenn das Flußsignal über dem Schwellwert liegt.

3. Steuergerät nach Anspruch 1, **gekennzeichnet durch** ein die Steuereinrichtung (10) aufnehmendes Gehäuse (27), das von dem in die Speiseleitung (3) geschalteten und an der Speiseleitung (3) befestigten Durchflußsensor (9) getragen ist.

4. Steuergerät nach einem der obigen Ansprüche, bei dem der Durchflußsensor (9) als Paddeldurchflußsensor mit einem in einen Rohrabschnitt der Speiseleitung (3) ragenden Paddel (33) ausgestaltet ist.

5. Steuergerät nach einem der obigen Ansprüche, bei dem im Durchflußsensor (9) eine Feder (34) zur Lagerung verwendet ist.

6. Steuergerät nach Anspruch 4, bei dem der Durchflußsensor (9) an den Pumpenzu- bzw. -ablauf der Umwälzpumpe (6) gekoppelt ist.

7. Steuergerät nach einem der obigen Ansprüche, das mit der Umwälzpumpe (6) in einem gemeinsamen Gehäuse untergebracht ist, wobei insbesondere ein Rotor der Umwälzpumpe (6) als Durchflußsensor (9) dient.

8. Verfahren zur Steuerung einer Umwälzpumpe (6) zum Einsatz in einer sanitären Wasserversorgungseinrichtung, bei der eine Warmwasserquelle (1) und eine Zapfstelle (2) über eine Speiseleitung (3) verbunden sind und von der Speiseleitung (3) eine Rückführleitung (4) zur Warmwasserquelle (1) besteht, so daß Speise-(3) und Rückfühneitung (4) eine Ringleitung (5) bilden, und die Umwälzpumpe (6) in die Ringleitung geschaltet ist, mit folgenden Verfahrensschritten:
- Kontinuierliche Überwachung des Flusses in der Speiseleitung (3),
- Einschalten der Umwälzpumpe (6) bei einem bestimmten Flußwert,
- anschließend Abschalten der Umwälzpumpe (6) in Abhängigkeit von einer Pumpzeit und unabhängig vom Fluß,
- nachfolgend Sperren des Betriebs der Umwälzpumpe (6) für die Dauer einer Totzeit und
- nach Ablauf der Totzeit Ermöglichen eines erneuten Betriebs der Umwälzpumpe (6),
**dadurch gekennzeichnet, daß** die Totzeit abhängig von einem Abklingen eines durch den Betrieb der Umwälzpumpe (6) in der Ringleitung erzeugten Flusses gewählt wird.

9. Verfahren nach Ansprüch 8, **dadurch gekennzeichnet, daß** die Totzeit ermittelt wird, indem die Umwälzpumpe (6) für die Dauer einer Pumpzeit eingeschaltet wird, danach ausgeschaltet wird, der Zeitraum vom Ausschalten der Umwälzpumpe (6) bis zum Abklingen des Flusses in der Ringleitung (5) unter einen Schwellwert gemessen wird.

10. Verfahren nach einem der Ansprüche 8 oder 9, **dadurch gekennzeichnet, daß** der bestimmte Flußwert zum Einschalten der Umwälzpumpe größer oder gleich dem Schwellwert ist.

## Claims

1. Control device for a circulating pump (6) for use in a sanitary water supply system, in which system a hot-water source (1) and a tapping point (2) are connected to each other via a feed line (3), and in which system there is a return line (4) from the feed line (3) to the hot-water source (1), such that the feed (3) and return (4) lines form a closed loop pipeline (5), and the circulation pump (6) is coupled into the closed loop pipeline (5), said control device (7) comprising:
- a flow sensor (9), which is coupled into the feed line (3), where it senses a flow, and which emits a flow signal,
- a control unit (10), comprising a switching output, at which a switching signal can be output, the switching signal causing the circulating pump (6) to operate, when said switching signal is at an activation level, and causing the circulating pump (6) to rest, when said switching signal is at a deactivation level,
- wherein the control unit (10) sets the switching signal to the activation level as a function of the flow signal, then maintains said activation level, independently of the flow signal, over a pumping period, then sets said switching signal to the deactivation level and maintains said deactivation level for the duration of a dead time, and allows a change to the activation level only upon expiration of the dead time,
**characterised in that** the control unit (10) terminates the dead time, when the flow signal drops below a threshold value.

2. Control device according to claim 1, **characterised in that** the control unit (10) sets the switching signal to the activation level, when the flow signal is above the threshold value.

3. Control device according to claim 1, **characterised by** a housing (27) accommodating the control unit (10), said housing being supported by the flow sensor (9), the latter being coupled into the feed line (3) and mounted to the feed line (3).

4. Control device according to any one of the above claims, wherein the flow sensor (9) is provided as a paddle flow sensor comprising a paddle (33), which paddle extends into a tube portion of the feed line (3).

5. Control device according to any one of the above claims, wherein a spring (34) is used for suspension in the flow sensor (9).

6. Control device according to claim 4, wherein the flow sensor (9) is coupled to the pump inlet or outlet, respectively, of the circulating pump (6).

7. Control device according to any one of the above claims which is accommodated in a common housing with the circulating pump (6), wherein, in particular, a rotor of the circulating pump (6) serves as the flow sensor (9).

8. A method of controlling a circulating pump (6) for use in a sanitary water supply system, in which system a hot-water source (1) and a tapping point (2) are connected with each other via a feed line (3), and in which system there is a return line (4) from the feed line (3) to the hot-water source (1), such that the feed (3) and return (4) lines form a closed loop pipeline (5), and the circulating pump (6) is coupled into the closed loop pipeline, said method comprising the following method steps:
- continuous monitoring of the flow in the feed line (3),
- activation of the circulating pump (6) at a predetermined flow value,
- subsequent deactivation of the circulating pump (6) as a function of a pumping period and independently of the flow,
- subsequent blocking of the operation of the circulating pump (6) for the duration of a dead time, and
- upon expiration of said dead time, allowing renewed operation of the circulating pump (6),
**characterised in that** the dead time is selected as a function of a decrease in the flow generated in the closed loop pipeline by the operation of the circulating pump (6).

9. Method according to claim 8, **characterised in that** the dead time is determined by activating the circulating pump (6) for the duration of one pumping period, then deactivating it, and measuring the time from deactivation of the circulating pump (6) until the decrease of the flow in the closed loop pipeline (5) below a threshold value.

10. Method according to claim 8 or 9, **characterised in that** the determined flow value for activation of the circulating pump is greater than or equal to the threshold value.

## Revendications

1. Dispositif de commande pour une pompe de circulation (6) destinée à être utilisée dans un dispositif d'alimentation en eau sanitaire, dans lequel une source d'eau chaude (1) et une zone de soutirage (2) sont reliées via une conduite d'alimentation (3), et une conduite de retour (4) est prévue depuis la conduite d'alimentation (3) vers la source d'eau chaude (1), de telle sorte que la conduite d'alimentation (3) et la conduite de retour (4) forment une conduite en boucle (5), et la pompe de circulation (6) est montée dans la conduite en boucle (5), le dispositif de commande (7) comportant :
- un capteur de débit (9), qui est monté dans la conduite d'alimentation (3) et y enregistre un écoulement et délivre un signal d'écoulement,
- une unité de commande (10) qui comporte une sortie de commande, laquelle délivre un signal de commande qui, en présence d'un niveau de connexion, active la pompe de circulation (6) et, en présence d'un niveau de déconnexion, immobilise la pompe de circulation (6),
- tandis que, en fonction du signal d'écoulement, l'unité de commande (10) met le signal de commande à un niveau de connexion et, indépendamment du signal d'écoulement, maintient ledit signal de commande pendant une période de pompage, le met ensuite au niveau de déconnexion et maintient celui-ci pendant la durée d'un temps mort et, seulement après l'écoulement du temps mort, permet de revenir au niveau de connexion,
**caractérisé en ce que** l'unité de commande (10) met fin au temps mort lorsque le signal d'écoulement est inférieur à une valeur seuil.

2. Dispositif de commande selon la revendication 1, **caractérisé en ce que** l'unité de commande (10) met le signal de commande au niveau de connexion lorsque le signal d'écoulement est supérieur à une valeur seuil.

3. Dispositif de commande selon la revendication 1, **caractérisé par** un boîtier (27), qui est destiné à recevoir l'unité de commande (10) et qui est supporté par le capteur de débit (9) monté dans la conduite d'alimentation (3) et fixé sur la conduite d'alimentation (3).

4. Dispositif de commande selon l'une quelconque des revendications précédentes, dans lequel le capteur de débit (9) est un capteur de débit à palette, qui est muni d'une palette (33) qui s'avance dans un tronçon de la conduite d'alimentation (3).

5. Dispositif de commande selon l'une quelconque des revendications précédentes, dans lequel un ressort (34) faisant fonction d'appui est utilisé dans le capteur de débit (9).

6. Dispositif de commande selon la revendication 4, dans lequel le capteur de débit (9) est raccordé à la conduite d'admission et d'évacuation de la pompe de circulation (6).

7. Dispositif de commande selon l'une quelconque des revendications précédentes, qui est monté avec la pompe de circulation (6) dans un carter commun, dans lequel dispositif en particulier un rotor de la pompe de circulation (6) constitue le capteur de débit (9).

8. Procédé de commande d'une pompe de circulation (6), destinée à être utilisée dans un dispositif d'alimentation en eau sanitaire, dans lequel une source d'eau chaude (1) et une zone de soutirage (2) sont reliées via une conduite d'alimentation (3), et une conduite de retour (4) est prévue depuis la conduite d'alimentation (3) vers la source d'eau chaude (1), de telle sorte que la conduite d'alimentation (3) et la conduite de retour (4) forment une conduite en boucle (5), et la pompe de circulation (6) est montée dans la conduite en boucle (5), comportant les étapes suivantes :
- surveillance continue de l'écoulement dans la conduite d'alimentation (3),
- activation de la pompe de circulation (6) lorsque l'écoulement atteint une valeur déterminée,
- ensuite, désactivation de la pompe de circulation (6) en fonction d'une période de pompage et indépendamment de l'écoulement,
- arrêt consécutif du fonctionnement de la pompe de circulation (6) pendant la durée d'un temps mort et
- après l'écoulement du temps mort, possibilité d'une remise en service de la pompe de circulation (6),
**caractérisé en ce que** le temps mort est choisi en fonction d'un arrêt progressif de l'écoulement généré par le fonctionnement de la pompe de circulation (6) dans la conduite en boucle.

9. Procédé selon la revendication 8, **caractérisé en ce que** le temps mort est déterminé, pendant lequel la pompe de circulation (6) est activée pour la durée d'un temps de pompage, est désactivée ensuite, la période depuis la désactivation de la pompe de circulation (6) jusqu'à l'arrêt progressif de l'écoulement dans la conduite en boucle (5) est mesurée en dessous d'une valeur seuil.

10. Procédé selon la revendication 8 ou 9, **caractérisé en ce que** la valeur d'écoulement déterminée pour l'activation de la pompe de circulation est supérieure ou égale à la valeur seuil.
